# EUROPEAN PATENT APPLICATION

(11) **EP 4 557 393 A2**
(43) Date of publication of application: **21.05.2025**
(21) Application number: 24208383.0
(22) Date of filing: 23.10.2024
(51) Int. Cl.: H01M 4/13, H01M 10/04, H01M 50/533, H01M 50/536, H01M 50/538

(54) **POLE PIECE, CORE, AND CELL**

(30) Priority: 27.10.2023 CN 202322913031 U; 25.04.2024 WO PCT/CN2024/089870
(71) Applicant: Eve Energy Co., Ltd., Huizhou, Guangdong 516006 (CN)
(72) Inventor: DENG, Leixin, Guangdong 516006 (CN); YI, Guiyong, Guangdong 516006 (CN); LIU, Mi, Guangdong 516006 (CN); SONG, Pengyuan, Guangdong 516006 (CN)
(74) Representative: Cabinet Beaumont

(57) **Abstract**

Provided are a pole piece, a core, and a cell, relating to the field of battery technology. The cell includes the pole piece. The pole piece includes a pole piece body (10) and tabs (20). Multiple tabs (20) are disposed on an edge of the pole piece body (10) and at intervals in a first direction. A notch (22) is formed at the end of each tab (20) facing away from the pole piece body (10). When the multiple tabs are smoothed or flattened, the overlapping and interference of the tabs can be reduced, and the flatness of the tabs after being smoothed or flattened is ensured. On this basis, the notch can release the internal stress of a tab, so that the deformation degree of the tab is reduced, and the flatness and consistency of the end surface of the cell are improved after the tab is smoothed. Thus, the stability of subsequent welding to a busbar is ensured, thereby ensuring the performance of the cell.

## Description

### TECHNICAL FIELD

The present application relates to the field of battery technology and, for example, a pole piece, a core, and a cell.

### BACKGROUND

In the related art, a cell mainly adopts the full-tab pole piece. When a cell is manufactured, the full-tab pole piece needs to be wound to form a core, the full tab of the core needs to be smoothed or flattened and then welded to a busbar, and finally, they are assembled into the cell. However, in a process where the full tab is smoothed or flattened, it is prone to overlapping and misalignment. As a result, the end of the core is uneven, and the stability of welding to the busbar is low. Further, the performance of the entire battery product is affected.

The pole piece in the related art generally adopts a multi-tab pole piece, that is, the full tab on the pole piece is cut to form multiple single tabs disposed at intervals by laser die cutting. In the process where tabs are smoothed or flattened, multiple tabs are transformed into an annular shape, that is, the end surface of the core. The smaller the width of a tab is, the higher the congruence of the end surface composed of multiple tabs is. However, the width of the tab cannot be infinitely small. Thus, in the actual bending process of the tab (that is, the process where the tab is smoothed or flattened), there is internal stress inside the tab. The internal stress may cause the tab to warp and deform during a bending process, and the generated deformation may severely affect the effect of smoothing or flattening the tab. As a result, the effect of subsequent welding to the busbar is affected, and the performance of the entire battery product is affected.

### SUMMARY

The present application provides a pole piece to reduce overlapping and misalignment of tabs, release the internal stress of the tab, and weaken the deformation of the tab. Thus, the flatness and consistency of the end surface of a core are improved, and the stability of welding to a busbar is ensured.

The present application provides a core. The preceding pole piece is disposed in the core so that the end surface of the core after being smoothed has high flatness, and the stability of welding to the busbar is ensured, thereby ensuring the performance of the cell.

The present application provides a cell. The preceding core is disposed in the cell so that the performance of the cell can be ensured.

In a first aspect, an embodiment of the present application provides a pole piece including a pole piece body and tabs.

Multiple tabs are disposed on an edge of the pole piece body. The multiple tabs are disposed at intervals in a first direction. A notch is formed at the end of each tab facing away from the pole piece body.

In one or more embodiments, the length of a tab in the first direction is d1, the height of the tab in a second direction is h1, d1 = A1 × r + 1.15, and a value range of h1/r is 0.2 to 0.9. r denotes a radius of a core formed by winding the pole piece. A1 denotes a constant related to the radius of the core. The second direction is perpendicular to the first direction.

In one or more embodiments, a value range of d1 is 0 to 10 mm, and/or a value range of h1 is 0 to 20 mm.

In one or more embodiments, the width of the notch in the first direction is d2, a value range of d2/d1 is 0.01 to 0.3. The height of the notch in the second direction is h2, and a value range of h2/h1 is 0.3 to 0.9.

In one or more embodiments, a value range of d2 is 0 to 5 mm, and/or a value range of h2 is 0 to 19.9 mm.

In one or more embodiments, the tab includes two first diagonal sides spaced apart in the first direction. The included angle between a first diagonal side and a top edge of the pole piece body connected to the tab is α, and α = 90° - (180 × d1)/(π × A2). A2 denotes a constant related to a radius of a core formed by winding the pole piece.

The tab also includes two second diagonal sides and a bottom edge arranged between the two first diagonal sides. The two second diagonal sides and the bottom edge jointly enclose and form the notch. The bottom edge is parallel to the first direction. The two second diagonal sides are parallel to each other. The two second diagonal sides are connected to two ends of the bottom edge respectively. The included angle between a second diagonal side and the bottom edge is β, and a value range of β is α - 20° to α + 10°.

In one or more embodiments, a value range of α is 10° to 90°, and/or a value range of β is 10° to 90°.

In one or more embodiments, in the first direction, the distance between two adjacent tabs is d3, and a value range of d3/d1 is 0.1 to 5.

In one or more embodiments, a value range of d3 is 0 to 20 mm.

In one or more embodiments, in the first direction, the notch is located in the middle position of the tab.

In a second aspect, an embodiment of the present application provides a core including a separator, a positive pole piece, a separator, and a negative pole piece which are stacked in sequence. The positive pole piece and/or the negative pole piece adopts the pole piece described in any one of the above.

The core is configured as being formed by winding the separator, the positive pole piece, the separator, and the negative pole piece which are stacked in sequence.

In a third aspect, an embodiment of the present application provides a cell including the preceding core, a busbar welded to the core, and a housing configured to encapsulate the core and the busbar.

The present application has beneficial effects described below.

In the pole piece provided in the present application, the notch is formed at the end of the tab facing away from the pole piece body so that the inner stress of the tab may be released through the notch and the warping deformation degree of the tab is reduced. Thus, the flatness and consistency of the end surface of the cell are improved after the tab is smoothed, and the stability of subsequent welding to a busbar is ensured, thereby ensuring the performance of a battery product.

The preceding pole piece is disposed in the core provided in the present application so that the end surface of the core after being smoothed has high flatness, and the stability of welding to the busbar is ensured, thereby ensuring the performance of the battery product.

The preceding core is disposed in the cell provided in the present application so that the performance of the cell can be ensured.

### BRIEF DESCRIPTION OF DRAWINGS

FIG. 1 is a diagram illustrating the structure of a pole piece body provided with a full tab according to an embodiment of the present application.
FIG. 2 is a diagram illustrating the structure of a pole piece according to an embodiment of the present application.
FIG. 3 is a diagram illustrating the structure of different forms of tabs according to an embodiment of the present application.
FIG. 4 is an enlarged partial view of a pole piece according to an embodiment of the present application.
FIG. 5 is a diagram illustrating the structure of a core according to an embodiment of the present application.
FIG. 6 is a diagram illustrating the structure of a cell according to an embodiment of the present application.

### Reference list

- 10: pole piece body
- 11: top edge
- 20: tab
- 21: first diagonal side
- 22: notch
- 221: bottom edge
- 222: second diagonal side
- 30: full tab
- 1: busbar
- 2: housing
- 3: core
- 4: negative pole piece
- 5: separator
- 6: positive pole piece

### DETAILED DESCRIPTION

In the description of the present application, unless otherwise expressly specified and limited, the term "connected to each other", "connected" or "secured" is to be construed in a broad sense, for example, as securely connected, detachably connected or integrated; mechanically connected or electrically connected; directly connected to each other or indirectly connected to each other via an intermediary; or internally connected between two elements or interaction relations between two elements. For those of ordinary skill in the art, specific meanings of the preceding terms in the present application may be understood based on specific situations.

In the present application, unless otherwise expressly specified and limited, when a first feature is described as "on" or "below" a second feature, the first feature and the second feature may be in direct contact, or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature, or the first feature is obliquely under, below or underneath the second feature, or the first feature is simply at a lower level than the second feature.

In the description of the embodiments, it is to be noted that orientations or position relations indicated by terms such as "above", "below", "left", and "right" are based on the drawings. These orientations or position relations are intended only to facilitate the description and simplify the operation and not to indicate or imply that a device or element referred to must have such particular orientations or must be configured or operated in such particular orientations. Thus, these orientations or position relations are not to be construed as limiting the present application. In addition, the terms "first" and "second" are used only for distinguishing between descriptions and have no special meaning.

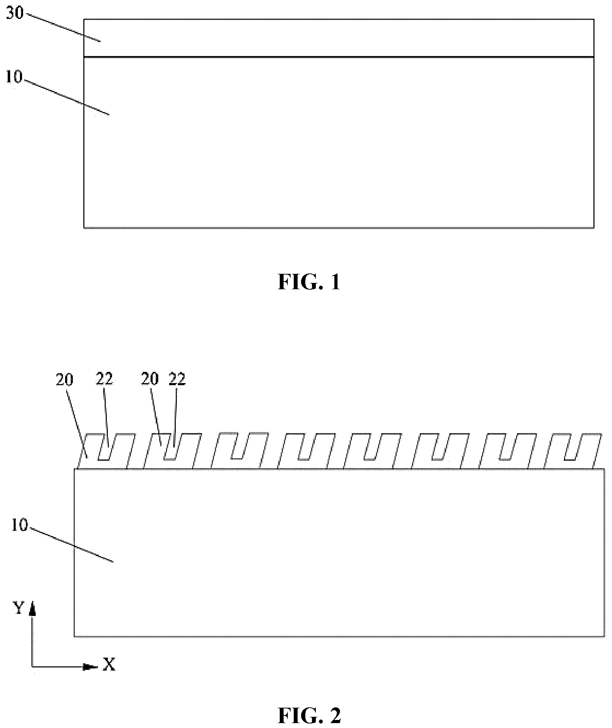

As shown in FIG. 2, an embodiment provides a pole piece. The pole piece includes a pole piece body 10 and tabs 20. Multiple tabs 20 are disposed on the upper edge of the pole piece body 10. The multiple tabs 20 are disposed at intervals in a first direction. The number of tabs 20 may be adaptively selected according to actual requirements, which is not limited herein. As shown in FIG. 1, the tabs 20 are obtained by performing laser die cutting on a full tab 30 disposed on the pole piece body 10. Before the die cutting, the pole piece composed of the pole piece body 10 and the full tab 30 is square foil. The pole piece may refer to a positive pole piece and/or a negative pole piece. When the pole piece is the positive pole piece, the base material of the positive pole piece may be aluminum foil. When the pole piece is the negative pole piece, the base material of the negative pole piece may be copper foil. For ease of understanding, the length direction of the pole piece body 10 is defined as the first direction, and the width direction of the pole piece body 10 is defined as the second direction.

For the preceding pole piece, multiple tabs 20 are disposed on the edge of the pole piece body 10 so that the requirement for a device used for smoothing the tab 20 can be reduced. Compared with the case where the full tab 30 is smoothed, the preceding disposition can reduce the overlapping and interference of the tabs 20, and the flatness of the tabs 20 after being smoothed or flattened is ensured. Thus, it is beneficial to the stability of subsequent welding to a busbar.

As shown in FIG. 2, in this embodiment, a notch 22 is formed at the end of each tab 20 facing away from the pole piece body 10. It is to be understood that internal stress refers to the stress that remains inside an object after an external load is removed. Internal stress is caused by the uneven volume change of the macroscopic or microscopic organization inside a material. For a metal tab 20, in the process where the tab 20 is smoothed or flattened, the external load causes the tab 20 to bend. Due to the interaction between atoms, the tab 20 spontaneously generates internal stress to resist the external force. After the external force is removed, the internal stress enables the tab 20 to have a tendency to return to the state before deformation. However, part of the atoms cannot overcome the resistance and return to an equilibrium position, and the interaction between atoms persists. As a result, a warping deformation phenomenon occurs. Thus, the notch 22 is disposed. The constraint force on the outer side of the atoms at the edge of the notch 22 is almost zero so that the atoms may move freely to the equilibrium position. A part of the internal stress in the region adjacent to the notch 22 is quickly released so that the tab 20 loses the drive force for warping and deformation, and the effect of weakening or releasing the stress is achieved. Finally, the warping and deformation of the tab 20 are alleviated. Thus, the flatness and consistency of the end surface of a core are improved after the tab 20 is smoothed, and the stability of subsequent welding to the busbar is ensured, thereby ensuring the performance of the cell.

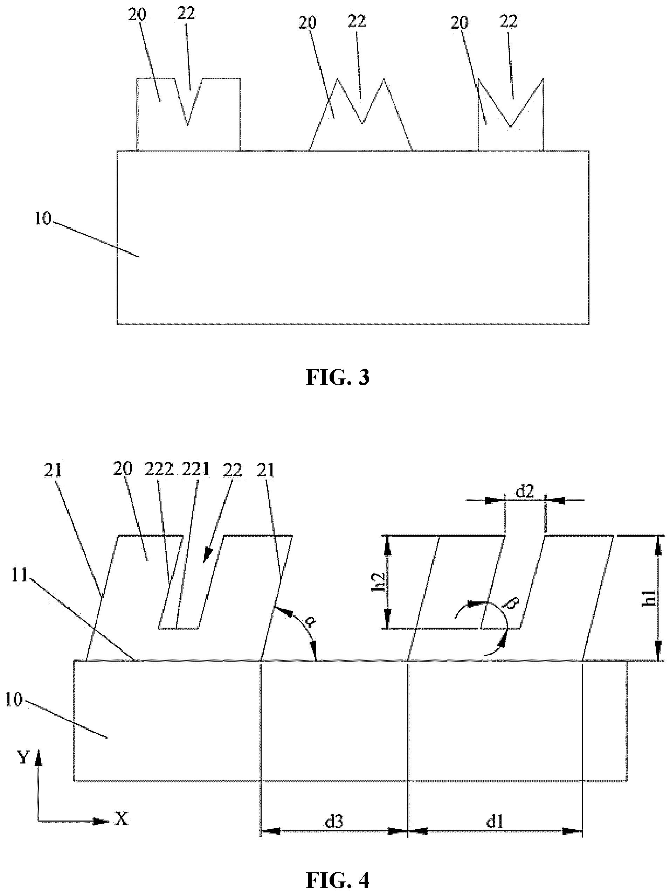

As shown in FIG. 2, in an embodiment, the tab 20 may be a parallelogram structure. The shape of the notch 22 on the tab 20 may be a parallelogram. In another embodiment, the shape of the tab 20 and the shape of the notch 22 may be also any one of the three structural forms shown in FIG. 3. FIG. 3 shows only three structural forms of the tab 20. In other embodiments, the shape of the tab 20 and the shape of the notch 22 may be a trapezoid, a semicircle, an arch, or other shapes, which is not limited herein. In this embodiment, description is given by using an example in which the tab 20 and the notch 22 are parallelograms.

For different types of cells, the size of the tab is different, that is, the size of the tab needs to be reasonably designed according to the radius of the core to ensure the performance of different types of cells. As shown in FIG. 4, the length of the tab 20 in the first direction is d1, and the height of the tab 20 in the second direction is h1, then d1 = A1 × r + 1.15, and h1/r is 0.2 to 0.9. r denotes the radius of the core formed by winding the pole piece. A1 denotes the constant related to the radius of the core. A1 is related to the selection of the radius of the core. After the radius of the core is determined, A1 is approximately a constant, does not need to be limited herein, and may be flexibly selected according to actual requirements. d1 and h1 are properly designed so that the performance of the cell can be ensured. For example, the ratio of h1 to r may be 0.25, 0.35, 0.45, 0.55, 0.65, 0.75, or 0.85.

For example, as shown in FIG. 4, a value range of the length d1 of a single tab 20 in the first direction is 0 to 10 mm. The length d1 of the tab 20 in the first direction is set in the preceding range. In one aspect, the requirements of cells having different radii may be satisfied, and d1 may select any value in the preceding range as long as the relationship between d1 and r is satisfied. In another aspect, the overlapping and interference of the tabs 20 may also be reduced, and the flatness of the tabs 20 after being smoothed or flattened is ensured. For example, the length d1 of a single tab 20 in the first direction may be 2 mm, 4 mm, 6 mm, 8 mm, or 10 mm as long as the relationship between d1 and r is satisfied.

For example, a value range of the height h1 of the tab 20 in the second direction is 0 to 20 mm. The height h1 of the tab 20 in the second direction is set in the preceding range. Not only the requirements of cells having different radii can be satisfied, but also the overlapping and interference of the tabs 20 after being smoothed or flattened can be reduced. Thus, the flatness of the tabs 20 after being smoothed or flattened is ensured. For example, the height h1 of a tab 20 in the second direction may be 4 mm, 8 mm, 12 mm, 16 mm, or 20 mm as long as the ratio relationship between h1 and r is satisfied.

As shown in FIG. 4, the tab 20 has two first diagonal sides 21 spaced apart in the first direction. The included angle between a first diagonal side 21 and the top edge 11 of the pole piece body 10 connected to the tab 20 is α. For different types of cells, α is related to the length d1 of a single tab 20 in the first direction and the radius of the core, that is, α needs to satisfy the following: α = 90° - (180 × d1)/(π × A2). A2 denotes the constant related to the radius of the core. A2 is related to the selection of the radius of the core. After the radius of the core is determined, A2 is approximately a constant, does not need to be limited herein, and may be flexibly selected according to actual requirements.

For example, the included angle α between the first diagonal side 21 and the top edge 11 of the pole piece body 10 has a value range of 10° to 90°. When α = 90°, the tab 20 is rectangular. The angle α of the tab 20 is reasonably set. First, the requirements of cells having different radii can be satisfied, thereby ensuring the performance of the cell. Second, when the tab 20 is smoothed, the constraint force between metals is smaller so that the overlapping and interference of the tabs 20 can be reduced, the edges of the tabs 20 are effectively prevented from being everted. Thus, the flatness of the tabs 20 after being smoothed or flattened is ensured, and the everted edges of the tabs 20 are prevented from scratching the inner wall of a battery housing. At the same time, the generation of metal shavings is reduced, and a battery short circuit caused by the metal shavings remaining inside the battery can be avoided, preventing the battery short circuit from reducing the production qualification rate of the battery. For example, the included angle α between the first diagonal side 21 and the top edge 11 of the pole piece body 10 may be 20°, 30°, 40°, 50°, 60°, 70°, or 80° as long as the relationship between α and d1 is satisfied. FIG. 4 shows only the case where the first diagonal side 21 tilts in a positive direction of the X-axis. In other embodiments, the first diagonal side 21 may also tilt in a negative direction of the X-axis. Referring to FIGS. 2 and 4, multiple tabs 20 are evenly distributed in the first direction on the upper edge of the pole piece body 10, which is beneficial to the subsequent winding and smoothing. On this basis, in the first direction, the distance between two adjacent tabs 20 is d3, and a value range of d3/d1 is 0.1 to 5. Within this ratio range, not only the performance of the cell can be ensured, but also the constraint force between metals can be effectively reduced. Thus, the overlapping and interference of the tabs 20 are reduced, and the flatness of the tabs 20 after being smoothed or flattened is ensured. For example, the ratio of d3 to d1 may be 1.5, 2, 2.5, 3, 3.5, 4, or 4.5.

For example, a value range of the distance d3 between two adjacent tabs 20 is 0 to 20 mm. The distance d3 between the two adjacent tabs 20 is set in the preceding range so that not only the performance of the cell can be ensured, but also the constraint force between metals can be effectively reduced. Thus, the overlapping and interference of the tabs 20 are reduced, and the flatness of the tabs 20 after being smoothed or flattened is ensured. For example, the distance d3 between the two adjacent tabs 20 may be 4 mm, 8 mm, 12 mm, 16 mm, or 20 mm as long as the ratio relationship between d3 and d1 is satisfied. In the pole piece provided in this embodiment, the shape, length, and height of the tab 20 and the distance between the two adjacent tabs 20 are designed to facilitate the processing of the tab 20. Moreover, when the tab 20 is smoothed, the constraint force between metals is smaller, so that the overlapping and interference of the tabs 20 can be reduced, and the flatness of the tabs 20 after being smoothed or flattened is ensured. Thus, it is beneficial to the stability of subsequent welding to the busbar, thereby ensuring the overall performance of the cell.

In one or more embodiments, as shown in FIG. 4, in the first direction, the notch 22 is located in the middle position of the tab 20. With this disposition, the tab 20 is evenly distributed on two sides of the notch 22, and the effect of releasing the internal stress is better.

As shown in FIG. 4, the width of the notch 22 in the first direction is d2, the height of the notch 22 in the second direction is h2, a value range of d2/d1 is 0.01 to 0.3, and a value range of h2/h1 is 0.3 to 0.9. Within the preceding ratio range, on the premise that the performance of the cell is ensured, the internal stress of the tab 20 can be effectively released, the warping and deformation of the tab 20 are alleviated. For example, the ratio of d2 to d1 may be 0.1, 0.15, 0.2, 0.25, 0.28, etc. and the ratio of h2 to h1 may be 0.35, 0.4, 0.45, 0.5, 0.55, 0.6, 0.65, 0.7, 0.8, etc.

For example, a value range of the width d2 of the notch 22 in the first direction is 0 to 5 mm. The width d2 of the notch 22 in the first direction is set in the preceding range. On the premise that the performance of the cell is ensured, the internal stress of the tab 20 can also be better released, and the deformation degree of the tab 20 is reduced. For example, the width d2 of the notch 22 in the first direction may be 1 mm, 2 mm, 3 mm, 4 mm, or 5 mm as long as the ratio relationship between d2 and d1 is satisfied.

For example, a value range of the height h2 of the notch 22 in the second direction is 0 to 19.9 mm. The height h2 of the notch 22 in the second direction is set in the preceding range. On the premise that the performance of the cell is ensured, the internal stress of the tab 20 can also be better released, and the deformation degree of the tab 20 is reduced. For example, the height h2 of the notch 22 in the second direction may be 4 mm, 8 mm, 12 mm, 16 mm, or 19 mm as long as the ratio relationship between h2 and h1 is satisfied.

The tab 20 also includes two second diagonal sides 222 and a bottom edge 221. The two second diagonal sides 222 and the bottom edge 221 are arranged between the two first diagonal sides 21 and jointly enclose and form the notch 22. The bottom edge 221 is parallel to the first direction. The two second diagonal sides 222 are parallel to each other. The two second diagonal sides 222 are connected to two ends of the bottom edge 221 respectively. The included angle between a second diagonal side 222 and the bottom edge 221 is β, and a value range of β is α - 20° to α + 10°. β is set in the preceding range, so that the internal stress of the tab 20 can be better released, and the warping and deformation of the tab 20 are alleviated. For example, β may be α - 10°, α - 5°, α, α + 5°, α + 10°, or etc.

For example, the included angle β between the second diagonal side 222 and the bottom edge 221 has a value range of 10° to 90°. The included angle β is set in the preceding range, so that the internal stress of the tab 20 can be better released, and the deformation degree of the tab 20 is reduced. Thus, the flatness and consistency of the end surface of the core are improved after the tab 20 is smoothed, and the stability of subsequent welding to the busbar is ensured, thereby improving the performance of the cell. For example, the included angle β may be 20°, 30°, 40°, 50°, 60°, 70°, or 80° as long as the relationship between β and α is satisfied. FIG. 4 shows only the case where the second diagonal side 222 tilts in the positive direction of the X-axis. In other embodiments, the second diagonal side 222 may also tilt in the negative direction of the X-axis. In actual production, for ease of processing, the angle β is usually equal to the angle α.

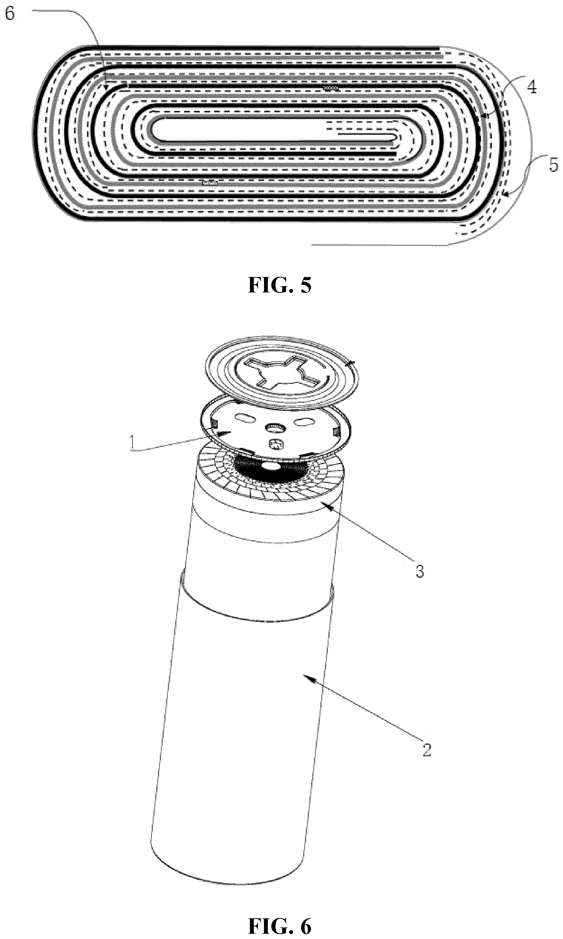

The embodiment further provides a core, as shown in FIG. 5. The core includes a separator 5, a positive pole piece 6, a separator 5, and a negative pole piece 4; the separator 5, the positive pole piece 6, the separator 5, and the negative pole piece 4 are stacked in sequence. The positive pole piece 6 and/or the negative pole piece 4 adopts the pole piece described above. When the core is manufactured, the separator 5, the positive pole piece 6, the separator 5, and the negative electrode piece 4 are sequentially stacked and then wound to form the core. The tabs 20 of the positive pole piece 6 and the tabs 20 of the negative electrode piece 4 are located at the two ends of the core separately, then the tabs 20 at the two ends are smoothed or flattened and then welded to the corresponding busbar, and finally, the tabs 20 and the busbar are assembled into the cell.

The preceding pole piece is disposed in the core in this embodiment so that the end surface of the core after being smoothed or flattened has high flatness and the stability of welding to the busbar is ensured, thereby ensuring the performance of the cell.

The embodiment also provides a cell, as shown in FIG. 6. the cell includes the core 3 described above, a busbar 1 welded to the core 3, and a housing 2; and the core 3 and the busbar 1 are encapsulated in the house 3. The cell is formed after the core 3 is put and sealed into the housing. Other components of the cell and operation processes are known to those skilled in the art, and details are not described herein again. The preceding core is disposed in the cell of this embodiment so that the performance of the cell can be ensured.

## Claims

1. A pole piece, comprising:
a pole piece body (10); and
a plurality of tabs (20) disposed on an edge of the pole piece body (10), wherein the plurality of tabs (20) are disposed at intervals in a first direction, and a notch (22) is formed at an end of each of the plurality of tabs (20) facing away from the pole piece body (10).

2. The pole piece according to claim 1, wherein a length of a tab (20) among the plurality of tabs in the first direction is d1, a height of the tab (20) in a second direction is h1, d1 = A1 × r + 1.15, and h1/r is 0.2 to 0.9, wherein r denotes a radius of a core formed by winding the pole piece, A1 denotes a constant related to the radius of the core, and the second direction is perpendicular to the first direction.

3. The pole piece according to claim 2, comprising at least one of the following size configurations:
a value range of d1 is 0 to 10 mm, or a value range of h1 is 0 to 20 mm.

4. The pole piece according to claim 2, wherein a width of the notch (22) in the first direction is d2, and a value range of d2/d1 is 0.01 to 0.3; and a height of the notch (22) in the second direction is h2, and a value range of h2/h1 is 0.3 to 0.9.

5. The pole piece according to claim 4, comprising at least one of the following size configurations:
a value range of d2 is 0 to 5 mm, or a value range of h2 is 0 to 19.9 mm.

6. The pole piece according to claim 2, wherein the tab (20) comprises two first diagonal sides (21) spaced apart in the first direction, an included angle between one of the two first diagonal sides (21) and a top edge (11) of the pole piece body connected to the tab (10) is α, and α = 90° - (180 × d1)/(π × A2), wherein A2 denotes a constant related to the radius of the core formed by winding the pole piece; and
the tab (20) further comprises a bottom edge (221) and two second diagonal sides (222), the two second diagonal sides (222) and the bottom edge (221) are arranged between the two first diagonal sides and jointly enclose and form the notch (22), the bottom edge (221) is parallel to the first direction, the two second diagonal sides (222) are parallel to each other and are connected to two ends of the bottom edge (221) respectively, an included angle between one of the two second diagonal sides (222) and the bottom edge (221) is β, and a value range of β is α -20° to α + 10°.

7. The pole piece according to claim 6, comprising at least one of the following size configurations:
a value range of α is 10° to 90°, or a value range of β is 10° to 90°.

8. The pole piece according to claim 2, wherein in the first direction, a distance between two adjacent tabs (20) of the plurality of tabs (20) is d3, and a value range of d3/d1 is 0.1 to 5.

9. The pole piece according to claim 8, wherein a value range of d3 is 0 to 20 mm.

10. The pole piece according to any one of claims 1 to 9, wherein in the first direction, the notch (22) is located in a middle position of the tab (20).

11. A core, comprising a positive pole piece, a negative pole piece, and a separator spaced between the positive pole piece and the negative pole piece, wherein at least one of the positive pole piece or the negative pole piece adopts the pole piece according to any one of claims 1 to 10.

12. A cell, comprising the core according to claim 11.
